# FASCICULE DE BREVET EUROPEEN

(11) **EP 0 827 250 B1**
(45) Date de publication et mention de la délivrance du brevet: **07.07.2004**
(21) Numéro de dépôt: 97410088.5
(22) Date de dépôt: 08.08.1997
(51) Int. Cl.: H02H 6/00

(54) **Déclencheur électronique comportant une memoire thermique**
Elektronischer Auslöser mit einem thermischen Speicher
Electronic trip device comprising a thermal memory

(30) Priorité: 30.08.1996 FR 9610799
(43) Date de publication de la demande: 04.03.1998
(73) Titulaire: Schneider Electric Industries SAS, 92500 Rueil-Malmaison (FR)
(72) Inventeur: Patrick, Perron, 38050 Grenoble Cedex 09 (FR); Nguyen, Hong, 38050 Grenoble Cedex 09 (FR)
(74) Mandataire: Jouvray, Marie-Andrée

(56) Documents cités:
- EP-A- 0 326 334
- EP-A- 0 578 958
- EP-A- 0 678 962

## Description

L' invention concerne un déclencheur électronique comportant :
- des moyens de mesure du courant circulant dans un réseau électrique à protéger,
- des moyens de traitement connectés aux moyens de mesure, calculant une valeur numérique représentative de l'état thermique du réseau et/ou d'une charge connectée au réseau électrique et produisant un ordre de déclenchement lorsque ladite valeur numérique excède des seuils et/ou des temporisations prédéterminés,
- des moyens d'alimentation, connectés au réseau et fournissant au moins une tension d'alimentation pour les moyens de traitement,
- des moyens de détection d'une chute imminente de la tension d'alimentation,
- une mémoire thermique, connectée aux moyens de traitement et comportant un condensateur en parallèle sur une résistance de décharge,
- les moyens de traitement comportant des moyens pour appliquer aux bornes du condensateur une tension représentative de la valeur numérique calculée en cas de chute imminente de la tension d'alimentation, et des moyens pour initialiser le calcul de la valeur numérique à une valeur représentative de la tension restante aux bornes du condensateur lors d'un rétablissement de la tension d'alimentation.

Dans les déclencheurs électroniques récents, un circuit de traitement numérique, généralement à microprocesseur, fournit une valeur numérique représentative de l'état thermique du réseau et/ou d'une charge connectée au réseau. Cette valeur numérique est calculée à partir de la mesure des courants circulant dans le réseau à protéger et simule l'échauffement et le refroidissement de la charge et/ou du réseau. Les déclencheurs électroniques connus sont généralement des déclencheurs à propre courant, c'est à dire alimentés par le réseau à protéger. Notamment après ouverture d'un disjoncteur associé au déclencheur, le déclencheur n'est plus alimenté. Il est connu de prévoir dans le déclencheur une mémoire thermique analogique, constituée par un circuit de type RC comportant un condensateur en parallèle sur une résistance. En cas de défaut détecté par le déclencheur, le condensateur de la mémoire thermique est chargé à une valeur représentative de l'état thermique avant déclenchement. Après déclenchement, le condensateur se décharge dans la résistance de la mémoire thermique, simulant le refroidissement de la charge et/ou du réseau. Lors d'une fermeture ultérieure du disjoncteur, le déclencheur, de nouveau alimenté par le réseau, mesure la tension restante aux bornes du condensateur de la mémoire thermique et utilise cette valeur pour initialiser la valeur numérique représentative de l'état thermique.

La charge du condensateur de la mémoire thermique sollicite la tension d'alimentation peu avant le déclenchement, c'est à dire au moment où elle va disparaître. L'invention a pour but un déclencheur dans lequel la mémoire thermique consomme peu d'énergie au moment du déclenchement.

Ce but est atteint par le fait que la mémoire thermique comporte une entrée connectée en permanence à une sortie des moyens d'alimentation, de manière à charger en permanence le condensateur à une valeur prédéterminée en présence de la tension d'alimentation, le déclencheur comportant des moyens pour décharger le condensateur jusqu'à une tension représentative de la valeur numérique calculée en cas de chute imminente de la tension d'alimentation.

Selon un développement de l'invention, la mémoire thermique comporte une résistance de charge connectée en série avec une diode et le condensateur entre la tension d'alimentation et la masse.

Selon un autre développement de l'invention, le déclencheur comporte des moyens de conversion analogique-numérique de la tension aux bornes du condensateur, les moyens pour décharger le condensateur comportant un interrupteur électronique connecté en parallèle sur le condensateur et comportant une électrode de commande, un signal de fermeture étant appliqué à ladite électrode de commande lors de la détection d'une chute imminente de la tension d'alimentation tant que la valeur numérique calculée est inférieure à une valeur numérique représentative de la tension aux bornes du condensateur.

D'autres avantages ressortiront plus clairement de la description suivante de différents modes de réalisation, donnés à titre d'exemples non limitatifs et représentés par les dessins annexés dans lesquels :
- La figure 1 illustre, sous forme schématique, un déclencheur de type connu.
- La figure 2 représente un mode de réalisation particulier du circuit de traitement et de la mémoire thermique d'un déclencheur selon l'invention.
- La figure 3 illustre un organigramme de fonctionnement d'un mode particulier de réalisation d'un déclencheur selon l'invention.
- Les figures 4a, 4b et 4c illustrent respectivement les formes d'onde du courant I mesuré, de la tension Vc aux bornes du condensateur de la mémoire thermique et de la valeur numérique calculée θc, dans un déclencheur selon l'invention.
- Les figures 5a, 5b et 5c illustrant respectivement, sous forme agrandie, les formes d'onde de I, Vc et θc, au moment de la fermeture du disjoncteur associé au déclencheur.

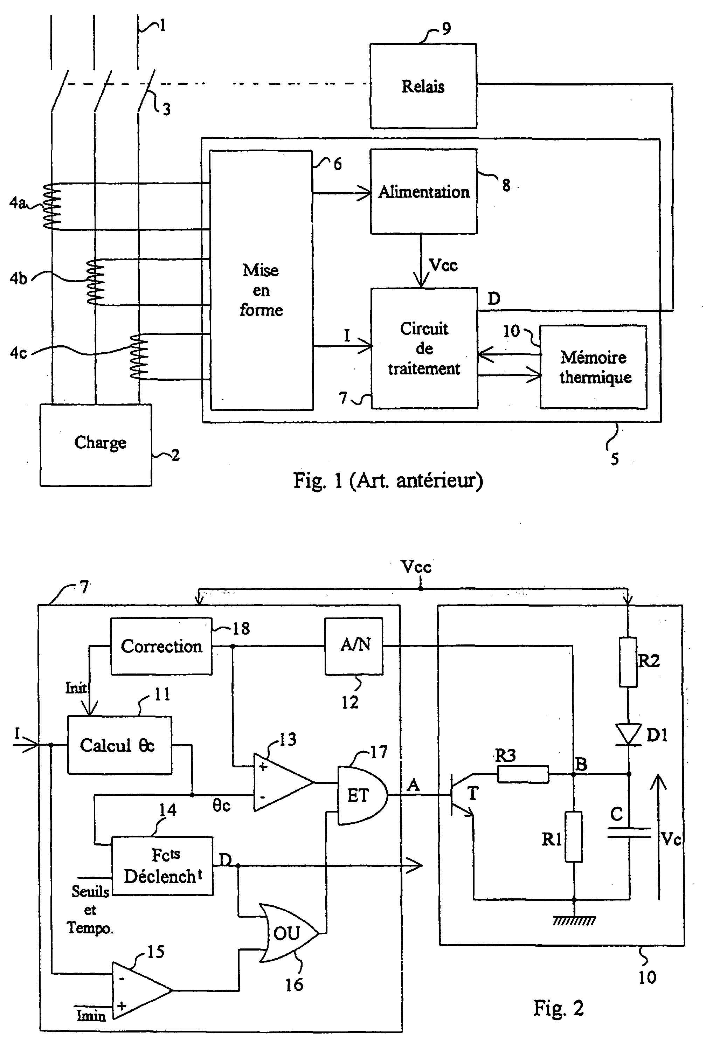

- La figure 1 représente le schéma-bloc d'un disjoncteur de type connu. Un réseau électrique 1 à protéger, composé de conducteurs électriques, alimente une charge 2 par l'intermédiaire de contacts 3. Des transformateurs de courant 4a, 4b et 4c, respectivement associés aux conducteurs du réseau 1, fournissent à un ensemble électronique de traitement 5 des signaux représentatifs des courants parcourant les conducteurs du réseau à protéger. Ces signaux sont, éventuellement par l'intermédiaire d'un circuit de mise en forme 6, appliqués à l'entrée d'un circuit de traitement 7. Un circuit d'alimentation 8, également connecté aux transformateurs de courant, fournit au circuit de traitement une tension d'alimentation Vcc. Le circuit de traitement 7 réalise diverses fonctions de déclenchement et fournit un signal de déclenchement D à un relais 9 d'ouverture des contacts 3 lorsqu'au moins un des courants mesurés dépasse un seuil prédéterminé pendant un temps prédéterminé. Un tel déclencheur peut notamment assurer des fonctions de déclenchement instantané, court retard, long retard, et/ou protection terre, et/ou déséquilibre de phase.

Comme représenté à la figure 1, une mémoire thermique analogique 10 est connectée au circuit de traitement 7.

La figure 2 représente plus en détail un mode particulier de réalisation du circuit de traitement 7 et de la mémoire thermique 10 d'un déclencheur selon l'invention.

La mémoire thermique 10 de la figure 2 comporte un circuit de type RC constitué par un condensateur C connecté en parallèle sur une résistance de décharge R1. Le circuit R1C est connecté en série avec une résistance de charge R2 et une diode D1, normalement passante, entre la tension d'alimentation Vcc et la masse. En fonctionnement normal du déclencheur, la tension Vcc est présente, sensiblement constante, et le condensateur C est chargé en permanence à une tension Vc voisine de Vcc.

La mémoire thermique 10 comporte un transistor T ayant un émetteur connecté à la masse et un collecteur connecté, par l'intermédiaire d'une résistance R3, à un point B, commun à R1 et C et différent de la masse. La base, ou électrode de commande, du transistor T est connectée à une sortie A du circuit de traitement 7.

Tant que le signal appliqué en A est nul, le transistor T est bloqué et le condensateur C est chargé par la tension d'alimentation Vcc lorsque celle-ci est présente. Si un signal logique non nul est appliqué en A, le transistor T, connecté en parallèle sur le condensateur C, devient conducteur et provoque la décharge du condensateur C à travers la résistance R3. Le circuit de traitement 7 limite cette décharge à une valeur telle que la tension Vc soit représentative d'une valeur numérique θc calculée par le circuit de traitement et représentative de l'état thermique de la charge 2 et/ou du réseau 1.

Les fonctions du circuit de traitement 7 nécessaires à la compréhension de l'invention sont représentées sous forme de schéma-bloc à la figure 2. Des signaux I, représentatifs des courants fournis par les transformateurs de mesure, sont appliqués à un circuit 11 de calcul de la valeur numérique θc. Celui-ci fournit, de manière connue, une valeur numérique θc représentative de l'état thermique de la charge 2 et/ou du réseau. Le circuit de traitement comporte un convertisseur analogique-numérique 12 dont l'entrée est connectée au point B. Le convertisseur 12 fournit ainsi en sortie des signaux numériques représentatifs de la tension Vc aux bornes du condensateur C de la mémoire thermique. Un comparateur 13 compare les signaux de sortie du convertisseur 12 et la valeur θc et fournit un signal logique binaire qui est nul si la valeur représentative de Vc est inférieure à θc et qui est non nul dans le cas contraire.

La sortie du circuit 11 est également connectée à l'entrée d'un circuit 14 de réalisation des fonctions de déclenchement, qui compare θc à des valeurs de seuil et fournit le signal de déclenchement D si θc dépasse au moins un seuil prédéterminé pendant une durée prédéterminée.

La production d'un signal de déclenchement D est représentative d'une chute imminente de la tension d'alimentation Vcc. En effet, l'application du signal D au relais 9 provoque l'ouverture des contacts 3 et l'annulation des courants parcourant les conducteurs du, réseau 1. Le circuit d'alimentation 8 n'est plus alimenté et sa tension Vcc disparaît alors au bout d'un certain temps. Le circuit 7 détecte également la chute imminente de la tension d'alimentation en surveillant les courants mesurés. Un comparateur 15 compare les signaux I représentatifs des courants mesurés à un courant minimum Imin et fournit un signal de sortie non nul si les courants mesurés sont tous inférieurs à Imin. En effet, dans ce cas également, l'énergie fournie au circuit d'alimentation 8 est insuffisante pour maintenir la tension d'alimentation Vcc à la valeur désirée. Les signaux de sortie des circuits 14 et 15 sont appliqués à deux entrées d'un circuit logique OU 16. Le circuit 16 fournit, en conséquence, un signal de sortie non nul dès qu'une chute imminente de la tension d'alimentation est détectée, que cette chute soit due à la détection d'un défaut se traduisant par l'émission d'un signal de déclenchement D ou à la détection de valeurs de courant mesurées inférieures à Imin.

Les sorties du comparateur 13 et du circuit logique 16 sont connectées à deux entrées d'un circuit logique ET 17, dont la sortie constitue la sortie A du circuit de traitement. Le signal appliqué en A est donc nul dès que l'un des signaux appliqués aux entrées du circuit logique 17 est nul, c'est à dire en l'absence de détection d'une chute imminente de la tension d'alimentation ou lorsque Vc est inférieur θc, bloquant ainsi le transistor T. Par contre, si une chute imminente de la tension d'alimentation a été détectée et que, simultanément, Vc est supérieur à θc, alors le signal logique appliqué à la sortie A n'est pas nul et rend conducteur le transistor T. Celui-ci provoque alors la décharge du condensateur C jusqu'à ce que la tension Vc aux bornes du condensateur C soit représentative de θc. Alors la sortie des circuits 13 et 17 repasse à zéro, bloquant de nouveau le transistor T. Il y a donc asservissement à la valeur θc calculée de la valeur de la tension Vc aux bornes du condensateur C de la mémoire thermique lorsqu'une chute imminente de la tension d'alimentation est détectée. Lorsque la tension d'alimentation disparaît, le circuit de traitement 7 et la mémoire thermique 10 ne sont plus alimentés et la tension Vc simule le refroidissement de la charge et/ou du réseau.

Lors du rétablissement de la tension d'alimentation, la tension Vc convertie par le convertisseur 12, appliquée à une entrée d'initialisation du circuit 11, sert de point de départ au calcul de θc.

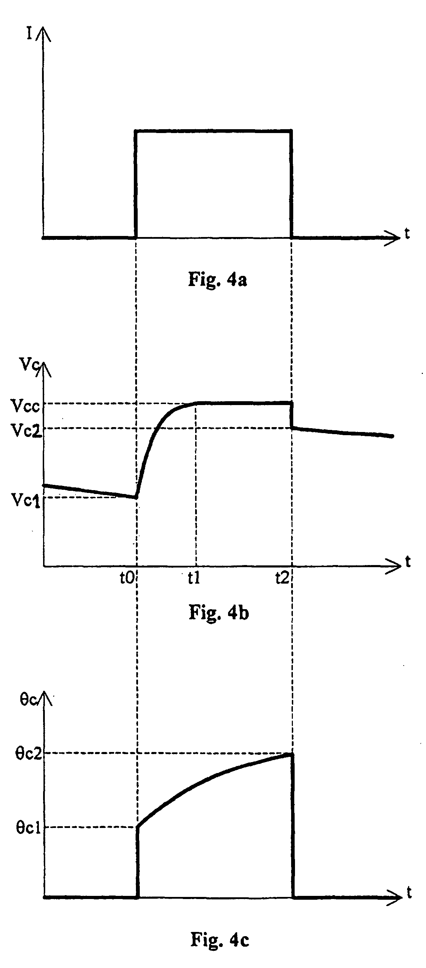

Les figures 4a, 4b et 4c illustrent respectivement les variations de I, Vc et θc en fonction du temps.

A un instant t0, les contacts 3 sont fermés et le courant I mesuré prend une valeur non nulle, supérieure à 1 min. La tension Vc aux bornes du condensateur C, est à une valeur Vc1 à l'instant t0. Cette tension Vc1 est utilisée par le circuit de traitement pour initialiser à une valeur θc1 correspondante la valeur numérique θc. A l'instant t0, l'alimentation Vcc est rétablie et le condensateur C se charge. La tension Vc atteint une valeur voisine de Vcc à un instant t1. La charge du condensateur se fait pendant une période de temps (t0-t1) où l'énergie est disponible. En présence du courant I (figure 4a) la valeur θc varie de θc1 à l'instant t0 à une valeur θc2 à un instant t2 où le courant I disparaît. Cette disparition peut par exemple être due à une ouverture manuelle des contacts 3. Cette disparition du courant I est détectée par le circuit de traitement 7 (circuits 15, 16 et 17) qui fournit en A un signal de mise en conduction de T, provoquant la décharge du condensateur C à l'instant t2. Cette décharge, rapide, s'interrompt dès que la tension Vc aux bornes du condensateur C atteint une valeur Vc2 correspondant à la valeur θc2. Puis la tension d'alimentation Vc disparaît, θc passe à 0 et le condensateur C se décharge lentement à travers la résistance R1, simulant le refroidissement de la charge et/ou du réseau.

Contrairement à la charge du condensateur C qui est relativement longue (t0-t1) et qui nécessite de l'énergie, sa décharge en t2, est rapide et ne consomme pas d'énergie. Cette caractéristique est particulièrement intéressante car en cas de perte imminente de la tension d'alimentation il est important d'utiliser à bon escient l'énergie encore disponible.

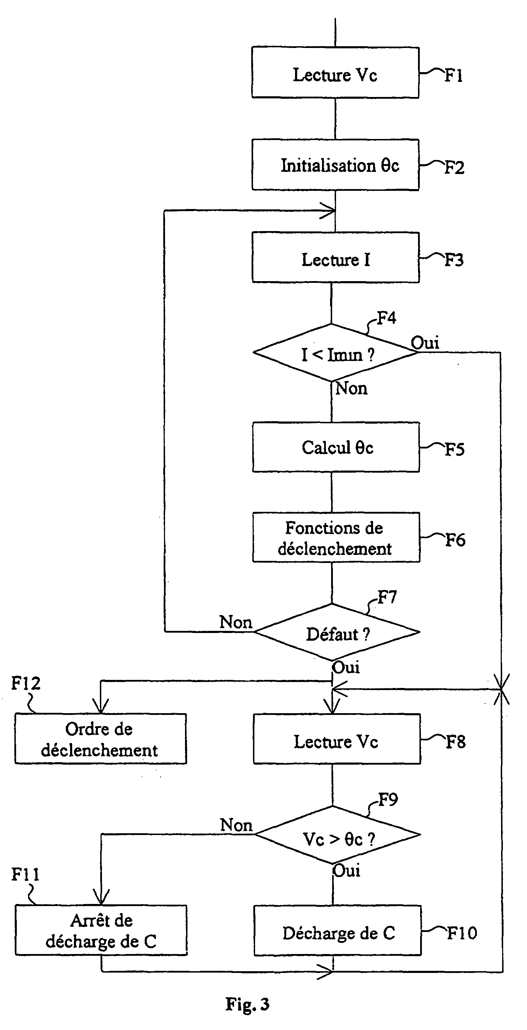

La figure 3 représente un organigramme pouvant être utilisé par le circuit de traitement 7 lorsque celui-ci comporte un microprocesseur réalisant les diverses fonctions représentés à la figure 2.

Après fermeture des contacts 3, dès que la tension d'alimentation Vcc est suffisante, le microprocesseur du circuit de traitement 7, lit la tension Vc dans une étape F1. Puis, dans une étape F2, il initialise θc en fonction de la valeur de Vc. Après une étape F3 de lecture des courants I mesurés, il compare, en F4, les courants mesurés à la valeur Imin. Si les courants mesurés sont suffisants, il effectue, en F5 le calcul de θc, puis réalise, en F6, les diverses fonctions de déclenchement. Si aucun défaut n'est détecté, en F7, le circuit de traitement se reboucle sur l'étape F3. Par contre, si les courants sont inférieurs à Imin (sortie Oui de F4) ou si un défaut est détecté (sortie Oui de F7), le circuit de traitement passe à une étape F8 de lecture de Vc. Puis il compare, en F9, Vc à θc. Si Vc est supérieur à θc, il fournit en F10 un signal de commande de décharge de C, avant de se reboucler à l'entrée de l'étape F8. Par contre, dès que Vc est inférieur à θc, il interrompt, en F11, la décharge de C, avant de se reboucler à l'entrée de F8. De plus, si un défaut a été détecté (sortie Oui de F7), un ordre de déclenchement est produit en F12.

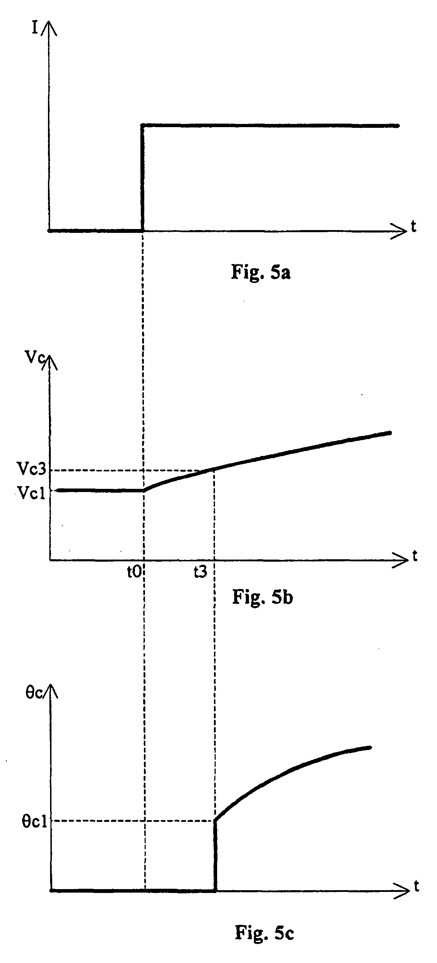

Dans la pratique, lors de la refermeture des contacts 3, il s'écoule un certain temps entre la mise sous tension du circuit de traitement (en t0) et la lecture de la tension résiduelle Vc. Ceci est représenté, avec une échelle très agrandie, sur les figures 5a, 5b et 5c. Dès l'instant t0, le condensateur C se recharge. La tension Vc passe ainsi de Vc1 à l'instant t0 à une tension Vc3, supérieure, à l'instant t3 où le circuit de traitement lit Vc pour initialiser θc. Pour améliorer la précision, on peut prévoir un circuit de correction 18 (figure 2) interposé entre l'entrée d'initialisation du circuit 11 et la mémoire thermique, plus précisément entre l'entrée d'initialisation et la sortie du convertisseur 12. La constante de temps de charge du condensateur C étant connue, le circuit de correction modifie la valeur Vc3 mesurée de manière à fournir au circuit 11 un signal représentatif de Vc1. La valeur initiale de θc est alors θc1, correspondant à Vc1. A titre d'exemple, la période de temps séparant t0 de t3 peut être de l'ordre de quelques millisecondes (3 ou 4) et la différence entre Vc3 et Vc1 de l'ordre de la dizaine de millivolts.

L'invention n'est pas limitée aux modes particuliers de réalisation représentés sur les figures. En particulier, le circuit d'alimentation 8 peut être alimenté à partir de capteurs de courant distincts des transformateurs de mesure 4a, 4b et 4c. Les signaux de courant I appliqués à l'entrée du circuit de traitement 7 peuvent être constitués par des signaux distincts pour chaque conducteur du réseau ou par des signaux correspondant au courant maximum parcourant les conducteurs du réseau.

Le transistor T peut être remplacé par tout interrupteur électronique permettant de court-circuiter le condensateur C lorsqu'un signal est appliqué sur une électrode de commande. Le transistor T peut être disposé dans le circuit de traitement 7 et non dans la mémoire thermique 10.

## Revendications

1. Déclencheur électronique comportant :
- des moyens (4a, 4b, 4c) de mesure du courant circulant dans un réseau électrique à protéger
- des moyens de traitement (7) connectés aux moyens de mesure, calculant (11, F5) une valeur numérique (θc) représentative de l'état thermique du réseau (1) et/ou d'une charge (2) connectée au réseau électrique et produisant (14, F6, F7, F12) un ordre de déclenchement (D) lorsque ladite valeur numérique (θc) excède des seuils et/ou des temporisations prédéterminés,
- des moyens d'alimentation (8), connectés au réseau (1) et fournissant au moins une tension d'alimentation (Vcc) pour les moyens de traitement (7),
- des moyens (14 à 16, F4, F7) de détection d'une chute imminente de la tension d'alimentation (Vcc),
- une mémoire thermique (10), connectée aux moyens de traitement (7) et comportant un condensateur (c) en parallèle sur une résistance (R1) de décharge,
- les moyens de traitement (7) comportant des moyens pour appliquer aux bornes du condensateur (C) une tension (Vc2) représentative de la valeur numérique calculée (θc2) en cas de chute imminente de la tension d'alimentation, et des moyens pour initialiser le calcul de la valeur numérique à une valeur (θc1) représentative de la tension (Vc1) restante aux bornes du condensateur (C) lors d'un rétablissement de la tension d'alimentation (Vcc), déclencheur **caractérisé en ce que** la mémoire thermique (10) comporte une entrée connectée en permanence à une sortie des moyens d'alimentation (8), de manière à charger en permanence le condensateur (C) à une valeur prédéterminée en présence de la tension d'alimentation (Vcc), le déclencheur comportant des moyens (T) pour décharger le condensateur jusqu'à une tension (Vc2) représentative de la valeur numérique calculée (θc2) en cas de chute imminente de la tension d'alimentation (Vcc).

2. Déclencheur selon la revendication 1, **caractérisé en ce que** la mémoire thermique (10) comporte une résistance de charge (R2) connectée en série avec une diode (D1) et le condensateur (C) entre la tension d'alimentation (Vcc) et la masse.

3. Déclencheur selon l'une des revendications 1 et 2, **caractérisé en ce qu'**il comporte des moyens (12) de conversion analogique-numérique de la tension (Vc) aux bornes du condensateur (C), les moyens pour décharger le condensateur comportant un interrupteur électronique (T) connecté en parallèle sur le condensateur (C) et comportant une électrode de commande, un signal de fermeture (A) étant appliqué à ladite électrode de commande lors de la détection d'une chute imminente de la tension d'alimentation tant que la valeur numérique calculée (θc) est inférieure à une valeur numérique représentative de la tension (Vc) aux bornes du condensateur.

4. Déclencheur selon l'une quelconque des revendications 1 à 3, **caractérisé en ce que** les moyens de détection d'une chute imminente de la tension d'alimentation comportent des moyens (15, F4) de comparaison des courants mesurés (I) et d'une valeur minimum prédéterminée (Imin), et des moyens (OU 16) pour fournir un signal de détection d'une chute imminente de la tension d'alimentation lorsque les courants mesurés (I) sont inférieurs à ladite valeur minimum ou lorsqu'un ordre de déclenchement (D) est produit.

5. Déclencheur selon l'une quelconque des revendications précédentes, **caractérisé en ce que** les moyens de traitement (7) comportent des moyens de correction (18) connectés entre la mémoire thermique (10) et une entrée d'initialisation des moyens de traitement.

## Patentansprüche

1. Elektronischer Auslöser mit:
- Meßmitteln (4a, 4b, 4c) zur Messung des in einem zu schützenden Leitungsnetz fließenden Stroms,
- mit den Meßmitteln verbundenen Verarbeitungsmitteln (7), die einen den thermischen Zustand des Netzes 1 und/oder einer an das Leitungsnetz angeschlossenen Last (2) abbildenden Digitalwert (θc) berechnen und einen Auslösebefehl erzeugen (14, F6, F7, F12), wenn der genannte Digitalwert (θc) bestimmte Schwellwerte und/oder Zeitverzögerungswerte überschreitet,
- an das Netz (1) angeschlossenen und mindestens eine Versorgungsspannung (Vcc) für die Verarbeitungsmittel (7) liefernden Stromversorgungsmitteln (8),
- Detektionsmitteln (14 bis 16, F4, F7) zur Erfassung eines bevorstehenden Abfalls der Versorgungsspannung (Vcc),
- einem, an die Verarbeitungsmittel (7) angeschlossenen und einen parallel zu einem Entladewiderstand (R1) geschalteten Kondensator (C) umfassenden thermischen Speicher (10),
- Verarbeitungsmitteln (7), welche Mittel umfassen, um bei bevorstehendem Abfall der Versorgungsspannung an die Klemmen des Kondensators (C) eine den berechneten Digitalwert (θc2) abbildende Spannung (Vc2) anzulegen, sowie Mittel umfassen, um bei Wiederkehr der Versorgungsspannung (Vcc) die Berechnung des Digitalwerts bei einem die Restspannung (Vc1) an den Klemmen des Kondensators (C) abbildenden Wert (θc1) zu initialisieren, **dadurch gekennzeichnet, daß** der thermische Speicher (10) einen, dauerhaft mit einem Ausgang der Stromversorgungsmittel (8) verbundenen Eingang umfaßt, derart daß der Kondensator (C) bei Vorhandensein der Versorgungsspannung (Vcc) permanent auf einen bestimmten Wert aufgeladen wird, wobei der Auslöser Mittel (T) umfaßt, um den Kondensator bei bevorstehendem Abfall der Versorgungsspannung (Vcc) bis auf einen Spannungswert (Vc2) zu entladen, der den berechneten Digitalwert (θc2) abbildet.

2. Auslöser nach Anspruch 1, **dadurch gekennzeichnet, daß** der thermische Speicher (10) einen, in Reihe zu einer Diode (D1) geschalteten Ladewiderstand (R2) umfaßt und der Kondensator (C) zwischen der Versorgungsspannung (Vcc) und Masse liegt.

3. Auslöser nach einem der Ansprüche 1 und 2, **dadurch gekennzeichnet, daß** er Mittel (12) zur Analog-Digital-Umwandlung der Spannung (Vc) an den Klemmen des Kondensators (C) umfaßt, wobei die Mittel zur Entladung des Kondensators einen, parallel zum Kondensator (C) geschalteten elektronischen Schalter (T) mit einer Steuerelektrode umfassen und die genannte Steuerelektrode bei Detektion eines bevorstehenden Abfalls der Versorgungsspannung mit einem Einschaltbefehl (A) beaufschlagt wird, wenn der berechnete Digitalwert (θc) unter einem, die Spannung (Vc) an den Klemmen des Kondensators abbildenden Digitalwert liegt.

4. Auslöser nach irgendeinem der Ansprüche 1 bis 3, **dadurch gekennzeichnet, daß** die Mittel zur Detektion eines bevorstehenden Abfalls der Versorgungsspannung Mittel (15, F4) zum Vergleich der gemessenen Ströme (I) mit einem festgelegten Mindestwert (Imin) sowie Mittel (ODER, 16) umfassen, die ein Signal der Detektion eines bevorstehenden Abfalls der Versorgungsspannung liefern, wenn die gemessenen Ströme (I) unter dem genannten Mindestwert liegen oder wenn ein Auslösebefehl (D) erteilt wird.

5. Auslöser nach irgendeinem der vorhergehenden Ansprüche, **dadurch gekennzeichnet, daß** die Verarbeitungsmittel (7) Korrekturmittel (18) umfassen, die zwischen den thermischen Speicher (10) und einen Initialisierungseingang der Verarbeitungsmittel geschaltet sind.

## Claims

1. An electronic trip device comprising :
- measuring means (4a, 4b, 4c) for measuring the currrent flowing in an electrical power system to be protected,
- processing means (7) connected to the measuring means, computing (11, F5) a numerical value (θc) representative of the thermal state of the power system (1) and/or of a load (2) connected to the electrical power system and producing (14, F6, F7, F12) a tripping order (D) when said numerical value (θc) exceeds preset thresholds and/or time delays,
- supply means (8) connected to the power system (1) and supplying at least one supply voltage(Vcc) for the processing means (7),
- means (14 to 16, F4, F7) for detecting an imminent drop of the supply voltage (Vcc),
- a thermal memory (10) connected to the processing means (7) and comprising a capacitor (C) in parallel with a discharging resistor (R1),
- the processing means (7) comprising means for applying to the terminals of the capacitor (C) a voltage (Vc2) representative of the calculated numerical value (θc2) in the event of an imminent drop of the supply voltage, and means for initialising calculation of the numerical value at a value (θc1) representative of the voltage (Vc1) remaining at the terminals of the capacitor (C) when the supply voltage (Vcc) is reestablished,
trip device **characterized in that** the thermal memory (10) comprises an input permanently connected to an output of the supply means (8) in such a way as to permanently charge the capacitor (C) to a preset value in the presence of the supply voltage (Vcc), the trip device comprising means (T) for discharging the capacitor to a voltage (Vc2) representative of the calculated numerical value (θc2) in the event of an imminent drop of the supply voltage (Vcc).

2. Trip device according to claim 1, **characterized in that** the thermal memory (10) comprises a charging resistor (R2) connected in series with a diode (D1) and the capacitor (C) between the supply voltage (Vcc) and ground.

3. Trip device according to one of the claims 1 and 2, **characterized in that** it comprises means (12) for analogue-to-digital conversion of the voltage (Vc) at the terminals of the capacitor (C), the means for discharging the capacitor comprising an electronic switch (T) connected in parallel to the capacitor (C) and comprising a control electrode, a closing signal (A) being applied to said control electrode when an imminent drop of the supply voltage is detected so long as the calculated numerical value (θc) is lower than a numerical value representative of the voltage (Vc) at the terminals of the capacitor.

4. Trip device according to any one of the claims 1 to 3, **characterized in that** the means for detecting an imminent drop of the supply voltage comprise means (15, F4) for comparing the measured currents (I) with a preset minimum value (Imin), and means (OR 16) for supplying a detection signal of an imminent drop of the supply voltage when the measured currents (I) are lower than said minimum value or when a tripping order (D) is produced.

5. Trip device according to any one of the foregoing claims, **characterized in that** the processing means (7) comprise correction means (18) connected between the thermal memory (10) and an initialisation input of the processing means.
